# EUROPEAN PATENT SPECIFICATION

(11) **EP 3 811 479 B1**
(45) Date of publication and mention of the grant of the patent: **21.05.2025**
(21) Application number: 19732418.9
(22) Date of filing: 13.06.2019
(51) Int. Cl.: H02G 3/32, F16L 3/10, F16L 3/237

(54) **CLAMPING MEMBER**
KLEMMELEMENT
ÉLÉMENT DE SERRAGE

(30) Priority: 19.06.2018 GB 201810050
(43) Date of publication of application: 28.04.2021
(73) Proprietor: Hughes Electronics Limited, London SE1 1ES (GB)
(72) Inventor: RYMAR, Gregory, London SE1 1ES (GB); HUGHES, Glyn, London SE1 1ES (GB)
(74) Representative: Sayer, Robert David
(86) International application number: PCT/GB2019/051639
(87) International publication number: WO 2019/243779

(56) References cited:
- WO-A1-2007/075141
- WO-A1-2017/060199
- US-A- 5 941 483
- US-A1- 2004 061 030
- US-A1- 2010 193 651

## Description

### Field

This invention relates to a clamping member, for example for cables, which may form part of a clamping system or cable brace for cables, for example those used in the cellular telephone industry.

### Background

Cables in the Cellular telephone industry are generally of standard size radii such as approximately 32 mm (1 1/4"), approximately 22 mm (7/8"), approximately 13 mm (1/2"), approximately 9.5 mm (3/8") and approximately 6 mm (1/4"). They are required to be affixed to structures of differing types such as poles, towers, frames and trays. There exist many cable braces to secure such cables, typically consisting of two jaws fabricated from rigid thermo-plastics such as ABS or PP and encompassing a central hole to permit a metal rod incorporating an integral screw thread to pass through them. Upper and lower nuts screw onto the rod. Cables are held secure when linear pressure is exerted on the jaws by tightening the nuts.

A problem exists, common to all orthodox braces in that they comprise spherical apertures designed to fit only one radial size of cable and they are limited in their ability to close beyond their perimeter width. Such braces cannot therefore work effectively on more than one size of cable. Consequently there exist different sizes of brace to fit the different sizes of cable and users must carry different braces and/or adaptors of some kind to fit the different cables.

Typical patents existing that describe such devices are GB235117 and US2020037193.

Also, US2010/193651 discloses conduit bracketry, systems and methods. WO2007/075141 discloses a retainer. US2004/061030 discloses cable hanger. WO 2017/060199 discloses a device for fastening of cables. US5941483 discloses a service line clamp.

A further problem exists in that these types of braces are generally made from rigid materials which by necessity make direct contact with cables and via contact with the central metal rods, to towers and other structures to which they are attached. Such structures are prone to movements which generate tremors and vibrations; these subtle movements may loosen the brace assemblies and also transmit deleterious frequency micro phonics into cables through the rigid materials. Such microphonics can be a source of Passive Intermodulation.

Moreover, if cables are slightly oversized, which is not unusual, such braces may crush and or deform them thereby diminishing their performance. And/or if cables are undersized they may not grip tightly enough.

### Summary

The invention is set forth in independent claim 1.

The second opposed configuration may be one in which the clamping member is rotated substantially 180 degrees from the first opposed configuration with respect to the other clamping member.

The mating surface may comprise male and female parts on an end surface of the one or more arms for engaging with respective female and male parts on an end surface of the one or more arms of the other such clamping member.

The first and second female members may have a mating surface which engages with the mating surface of the other such clamping member only when in the second opposed configuration. The mating surface of the one or more female members may comprise male and female parts on a base wall thereof for engaging with the male and female parts of the one or more members when in the second opposed configuration.

The body may comprise on a second side, substantially opposite to its first side, a mating surface for engagement with a second side of another such clamping member.

The mating surface may comprise male and female parts for engaging with respective female and male parts on the second side of another such clamping member.

The free-ends of the first and second flanges may be stepped so as to permit the free-ends to mate with corresponding first and second flanges of another such clamping member when in the second opposed configuration.

The clamping member may further comprise an aperture provided in the mid-wall, substantially transverse in orientation to direction of the open channels, which aperture substantially aligns with a corresponding aperture of another such clamping member when in both the first and second configurations.

The two open channels may have a cross-sectional profile which is curvilinear. The curvilinear profile may comprise first and second substantially straight portions joined by a curved portion. The profile may be in the manner of a curved triangle, with one side open.

The two open channels may be lined at least partially with a resilient material. The resilient material may comprise a shaped gripping surface.

The clamping member may further comprise an aperture for receiving a cable tie or the like.

Another aspect provides a cable clamp system comprised of first and second clamping members according to any preceding definition.

Another aspect provides a cable clamping system comprising: first and second clamping members, each clamping member comprising a body formed of a mid-section, two oppositely extending flanges from the mid-section which are shaped on a first side to define respective first and second open channels, and a post extending from the mid-section which is arranged in use to engage with the post of the other clamping member in a first opposed configuration to define cable-retaining channels of a first size and to engage with an aperture in the mid-section of the other clamping member in a second opposed configuration to define cable-retaining channels of a second, reduced, size.

The invention also provides a jaw corresponding to the clamping member of claim 1.

The jaw may be for use in the cable retaining brace and may comprise an open, rounded angle triangle or any other shape comprising at least one but preferably two retention points.

Another aspect provides an adjustable cable brace for clasping different types of cables with different size radii comprising two jaws.

The brace may comprise an aperture for retaining cables, the aperture being of a rhombus shape with at least one rounded angle or any other shape comprising at least 2 but preferably 4 retention points.

The cable aperture may be limited in its ability to close beyond the cooperative height of its delimiting adjustment protocols.

Another aspect provides an adjustable cable brace for clasping different types of cables with different size radii comprising two jaws at least one side of each jaw comprising a cooperative perimeter design such as but not limited to a cutout or stepped design that may cooperate to allow the jaws to close beyond the limitations of orthodox straight perimeter braces.

Another aspect provides a cable brace for clasping cables comprising a hole at its fulcrum the surface wall of which may, but not necessarily, be formed of or incorporate a discrete insert comprised of a tractable compressive strength such as, but not limited to elastomers or a thermoplastics designed so as to have tractable qualities.

Another aspect provides a cable brace for clasping cables comprising at least one inner (cable retaining) face of its jaw that may but not necessarily, be formed of or incorporate a discrete tractable compressive strength surface such as, but not limited to elastomers or a thermoplastic designed so as to have tractable qualities.

Another aspect provides a brace for clasping cables of any design that incorporates a slot into at least one jaw that may accommodate a cable tie or any other fastening mechanism.

Another aspect provides a brace for clasping cables that comprises a female or other cooperative part of any type or design that may interact with a male part or other cooperative part of any type or design adjoined to any type of adjunctive 'Daughter' brace or other apparatus. Said parts may cooperate to join and secure said Daughter brace to the 'Mother' brace.

Another aspect provides a brace for clasping cables comprising two jaws wherein at least one of the jaws comprises a spherical or semi spherical or any other shape or clip design that may retain cables or other parts either constructed and formed as an element of the jaw or as a discrete addition thereto.

Another aspect provides a jaw for use in a cable retaining brace as in any previous definition, comprising spherical or semi spherical or any other retaining shape or clip design either constructed and formed as an element of the jaw, or as a discrete addition thereto.

Another aspect not falling under the scope of the appended claims provides an ancillary or daughter cable brace for securing cables that may be affixed to a primary or Mother brace of any preceding claim comprising male or other cooperative parts of any type or design that may cooperate with the cable brace of any other definition.

The brace maybe may be of a 'butterfly' shape or any other design.

Another aspect provides a cable bracing system with features that allows attachment of ancillary braces and/or equipment.

### Brief Description of the Drawings

Example embodiments will now be described, by way of nonlimiting example, with reference to the accompanying drawings, in which:
Figure 1a is a side view of a clamping member according to the invention;
Figure 1b is an isometric view of the Figure 1a clamping member;
Figure 2a is an isometric view of a pair of Figure 1a clamping members in a first opposed configuration, providing a clamping or bracing system according to an example embodiment;
Figure 2b is a side view of the Figure 2a clamping system;
Figure 3 is a side view of the Figure 2a clamping system in a second, opposed configuration;
Figure 4a is a side-sectional view of the Figure 3 clamping system;
Figure 4b is a close-up view of part of the Figure 4a clamping system;
Figure 5 is a side-sectional view of the Figure 2b clamping system;
Figure 6 is an isometric view of the clamping system according to example embodiments when retaining a plurality of cables;
Figure 7 is a side view of a plurality of clamping systems according to example embodiments, in a stacking formation;
Figure 8 is a side-sectional view of a clamping member according to example embodiments, including a lining element;
Figure 9a is an end view of the clamping system according to example embodiments;
Figure 9b is an isometric view of the Figure 7 clamping system according to example embodiments,
Figure 10 is a top plan view of a clamping member according to example embodiments;
Figure 11a is a plan view of a daughter brace according to example embodiments not falling under the scope of the appended claims
Figure 11b is a side view of the Figure 11a daughter brace;
Figure 12 is an isometric view of the Figure 11a daughter brace, when opened;
Figure 13 is a side view of the Figure 7 clamping system incorporating the Figure 11a daughter brace, according to example embodiments;
Figure 14 is an isometric view a clamping member according to example embodiments, incorporating another daughter brace; and
Figure 15 is a partial sectional isometric view of a clamping system according to the invention.

### Detailed Description

Embodiments herein relate to a clamping member, for example for cables, which may form part of a clamping system or cable brace for cables, for example those used in the cellular telephone industry. The term adjustable cable brace may be used herein to refer to such a clamping system.

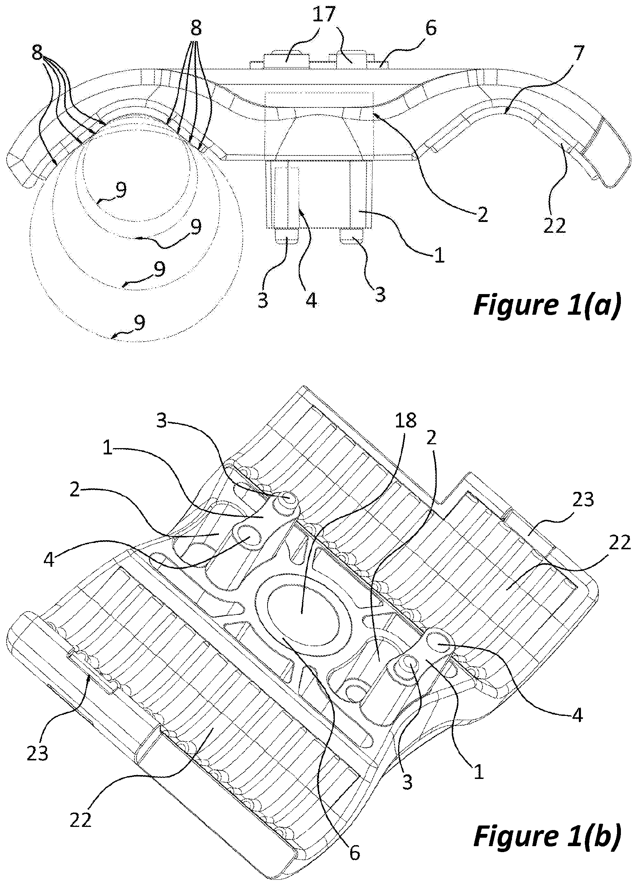

Figures 1a and 1b are respective side and isometric views of a first member, hereafter referred to as an upper jaw, comprising a body which comprises, on a first side thereof, a male element 1, e.g. an arm or post extending from the body, a female element 2, e.g. a recess or aperture within the body, an auxiliary male element 3, and an auxiliary female element 4. The auxiliary male element 3 may for example be a stud or similar protrusion on the end-face of the male element 1. The auxiliary female element 4 may for example a recess or aperture on the end-face of the male element 1, shaped and configured to receive the stud or similar protrusion 3 of another such member, i.e. a second member of substantially similar construction. The first member further comprises a first and second open channels which, as an example, may have the shape of an open-sided triangle with a rounded angle 7; within the two channels may be one or more retention points 8 for different size cables (the exact point or points being subject to tangential of size of cable). Different size cable radii 9 are shown (demonstrating different tangential factors to retention points). A liner 22, e.g. formed of a resilient material, may provide a tractable surface for the retention points 8. The liner 22 may be a separate part or integral with the one or more channels.

According to the invention, the body provides the first and second open channels either side of a mid-wall, and the male element 1 extends substantially transverse or orthogonal to the mid-wall.

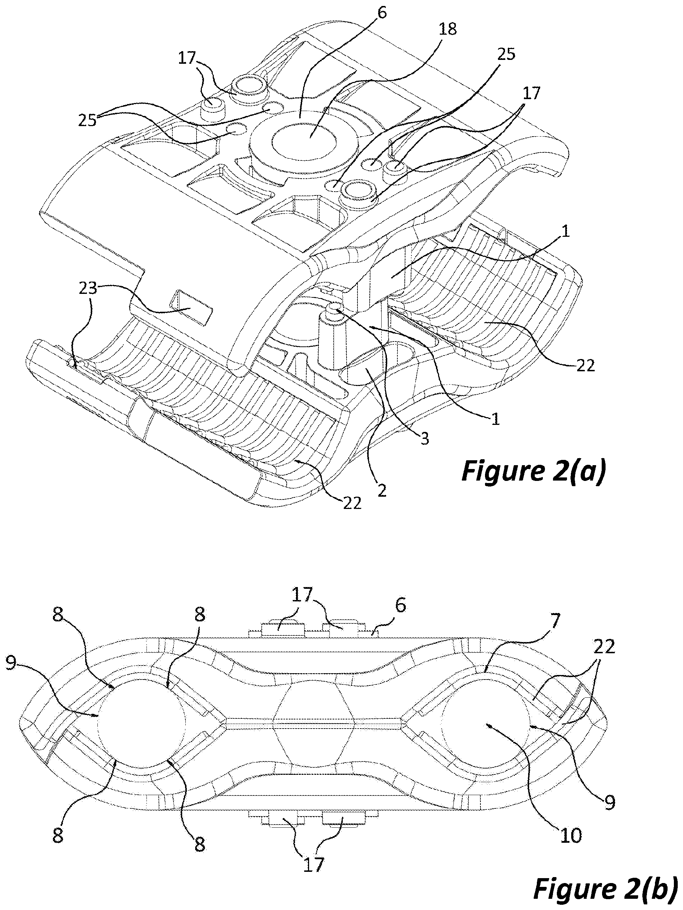

Figures 2, 2a are respective side and isometric views of upper and lower jaws (wherein the lower jaw may be identical or substantially identical to the upper jaw) or clamping members, forming the brace (or bracing system) showing what may be referred to as an approximate rhombus shape 1C with rounded angles top and bottom for retaining a cable.

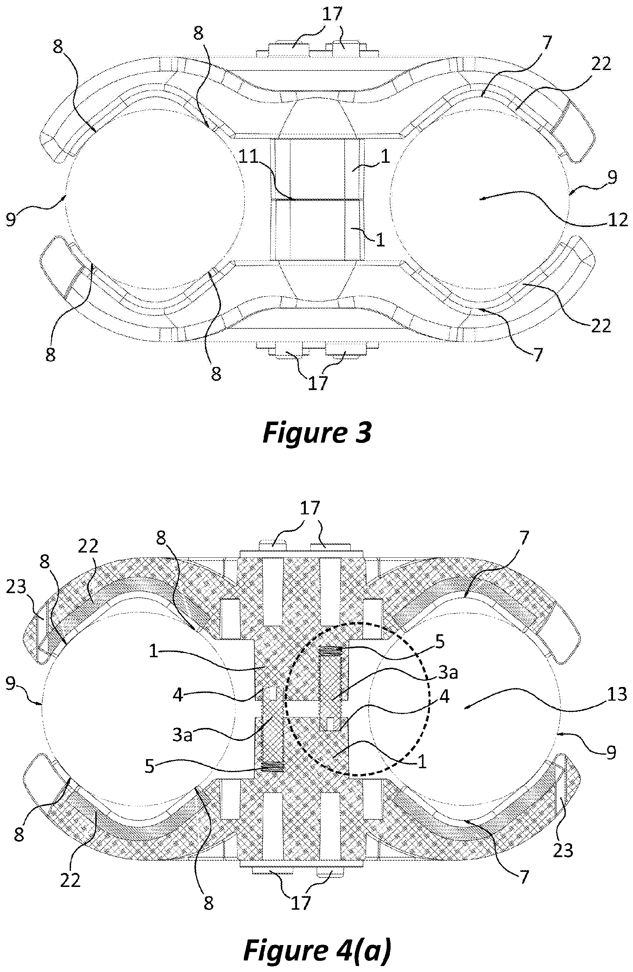

Figure 3 is a side elevation of the adjustable cable brace showing an interacted Male to Male protocol 11 of opposed male elements 1, and a large delimited cable aperture 12. This represents one configuration.

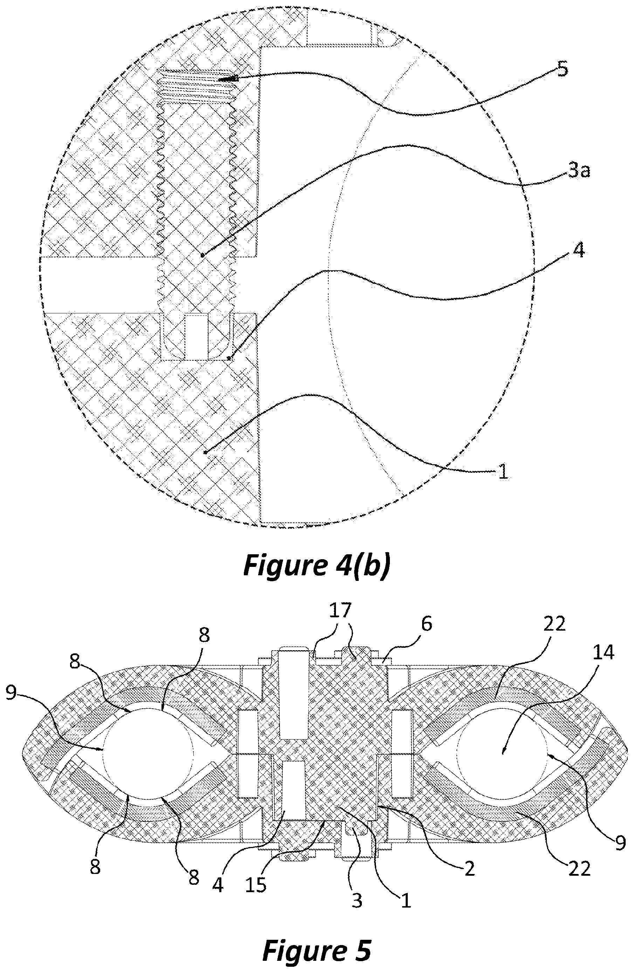

Figures 4a, 4b are respective a side sectional and detailed view of the adjustable cable brace. A threaded auxiliary male element 3a is shown, as is a threaded cavity 5, and a larger delimited cable aperture 13.

Figure 5 is a side sectional view of the adjustable cable brace showing an interacted Male to Female protocol 15 of the one male element 1 with an opposed female element 2 on the other member, and a smaller delimited cable aperture 14. This results from one of the members, i.e. one of the upper or lower jaws being rotated with respect to the other by 180 degrees.

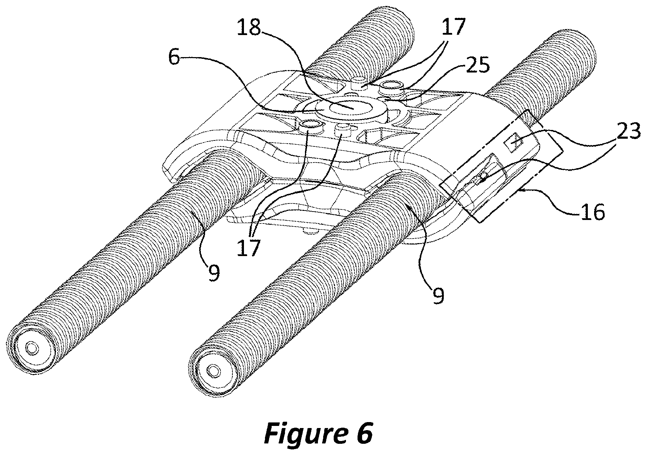

Figure 6 is an isometric view of the adjustable cable brace showing a tractable compressive strength insert 6, a cooperating cutout or stepped perimeter 16, interactive Male and Female elements 17 for loading other such braces above and/or below; and a hole 18 at the fulcrum of the jaw for receiving a threaded shaft or rod.

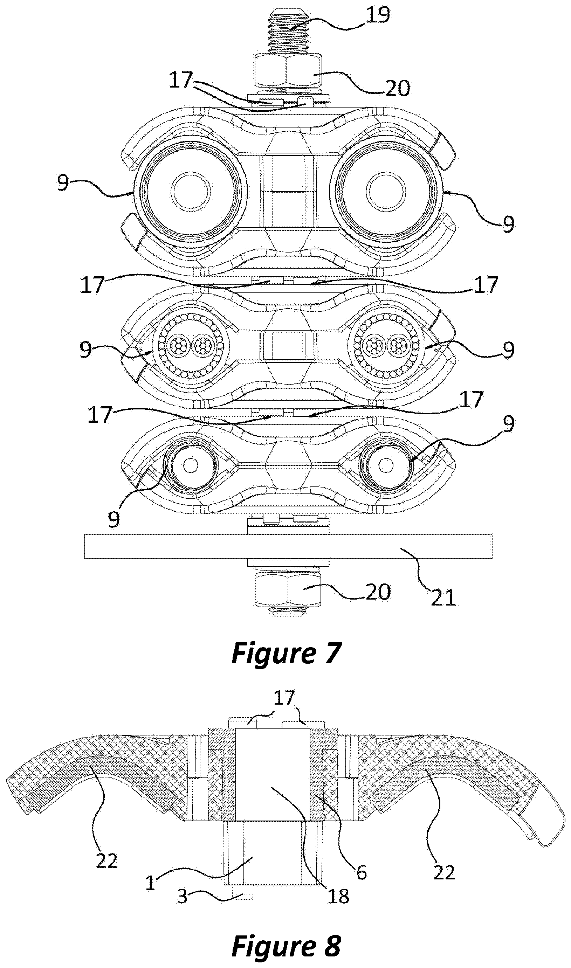

Figure 7 is a side view of a series of cable braces or loaded jaws showing a threaded shaft or rod 19, nuts 20 and a bulkhead 21.

Figure 8 is a side cross section view of the upper jaw showing a tractable surface 22.

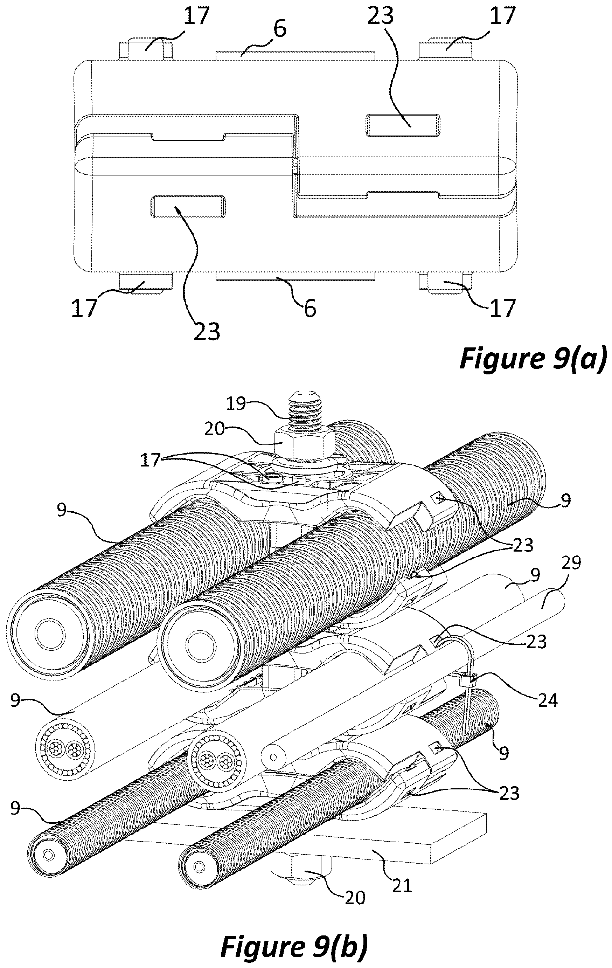

Figures 9a, 9b are front views showing a slot 23 for a fastening mechanism and a cable tie 24 passing through said slot.

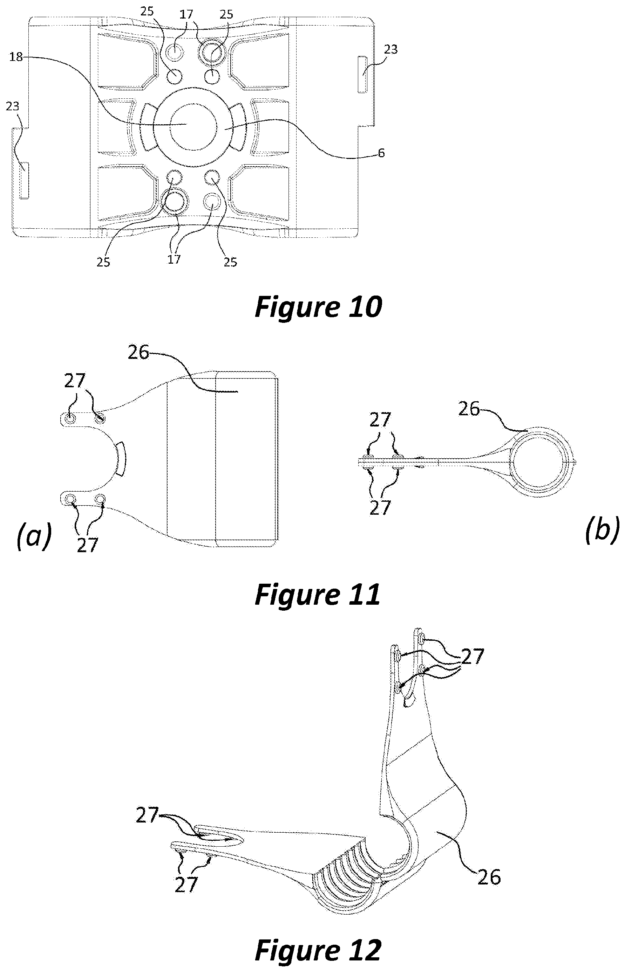

Figure 10 is a plan view of the upper jaw of what may be termed a Mother cable brace showing cooperative female parts 25 for interaction with a Daughter brace 26. Figures 11a, 11b are respective plan and side views of the Daughter brace 26 not falling under the scope of the appended claims showing cooperative male parts 27 for interaction with the Mother brace;

Figure 12 is an isometric view of the adjunctive or Daughter brace 26 when opened.

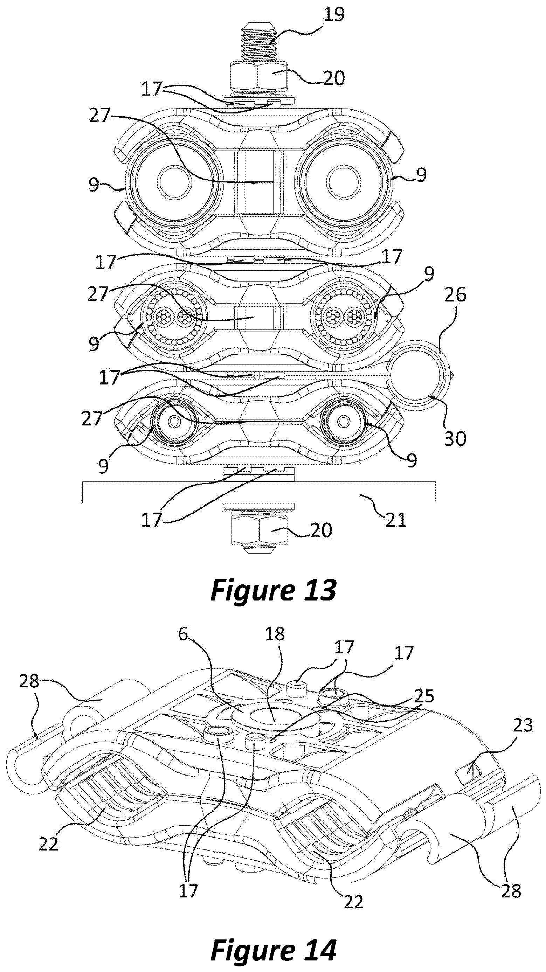

Figure 13 is a side view of such cable braces loaded, one on top of the other, showing: an assimilated Daughter brace 26 and differing aperture protocols 27.

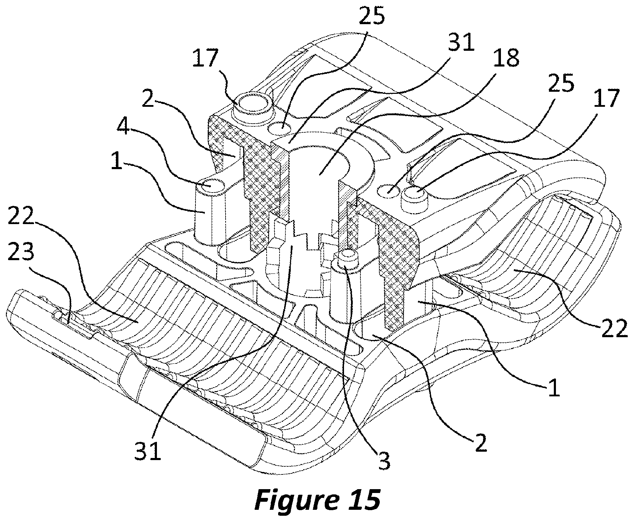

Figure 14 is an isometric view of another adjunctive brace; and Figure 15 is a partially sectional isometric view of the brace showing a stepped or notched element 31.

Embodiments described herein relate to a clamping member, which may be termed a jaw as shown in Figures 1a and 1b for use in a cable retaining brace comprising a first and second male 1, and a first and second female element 2. Said male elements 1 do in themselves incorporate at least one auxiliary male 3 and one auxiliary female element 4 and/or alternatively a stepped or threaded male element 3a as shown in Figure 4. The described jaw cooperates with an inverted jaw comprising the same or similar elements to provide an adjustable cable brace. Said elements and features interact to allow adjustment of said cable brace to provide a number of different aperture sizes for clasping cables with different size radii such as, but not exclusively, the cellular telephone cables described.

The adjustable brace may consist of at least one upper jaw and one lower jaw, both jaws being of an identical or similar shape as described herein. The inner face or cable retaining side of each jaw comprises an open sided triangle shape with a rounded angle 7 or any other shape that provides at least one but preferably two retention points 8 that can retain different sizes of cables 9. When two jaws are positioned, inner face to inner face, in a mirror image, an adjustable brace is formed as in Figures 2a and 2b and the two open triangle shapes create an aperture where cables may sit. The aperture created may be of a similar shape to a rhombus 10 with rounded angles top and bottom or any other shape that can provide at least two but preferably four retention points which together can retain different size radii of cables 9 securely and efficiently without crushing them, as the brace adjusts to different close positions. The exact point of retention 8 may vary according to different cable radii and its tangential factor to the said shape.

As described, the inner face of each jaw incorporates a first and a second male element 1 and a first and a second female element 2, each jaw thereby having the same or similar features. The two jaws may rotate on a horizontal plane to allow the elements to interact in differing protocols such as Male to Male, or Male to Female.

When the jaws are set in the Male to Male protocol, or first configuration, as in Figure 3, the brace is limited in its ability to close beyond the loaded height of the two interacted Male parts 11, limiting its closing ability beyond said height thereby providing a de-limiting protocol for creating a large aperture 12 wherein to seat and brace large cables 9 without crushing them when linear force is applied. The same or similar aperture delimiting protocol may be applied for creating apertures of differing sizes for different cables.

As described the Male elements 1 in themselves do incorporate auxiliary cooperative male 3 / 3a and female 4 elements with which to create further delimiting apertures to limit said brace's ability to close beyond other aperture sizes, for which see Figure 4/4a. Said auxiliary male element 3a may comprise a method of further aperture adjustment such as, but not limited to, incorporating a threaded section, by rotating said element 3a in the opposing direction to its threaded cavity 5 its height increases thereby creating larger delimited apertures 13. Said female auxiliary element 4 may limit the male element 3a depth of penetration thereby providing a method of delimiting the brace aperture 13 proportionally to the height of the auxiliary male element 3a. Said female element 4 also serves to hold the auxiliary male elements 3 or 3a secure and prohibit unwanted rotation of the jaws. Those skilled in the art will readily understand the potential that the design offers in creating a wide range of different size cable apertures, an example being that several auxiliary elements may be used one on top of the other or the auxiliary element design may replace the primary element in its entirety all to enable or support protocols to maximize adjustment of delimited cable apertures. The different delimited apertures may be achieved by rotating one or both jaws on the horizontal plane and engaging different elements.

Alternatively the delimiting protocol may be attuned to allow the jaws to fit together in a Female to Male orientation, as in Figure 5, whereby the Male elements 1 interact with the Female elements 2 to allow the two jaws to close further together thereby creating smaller delimited apertures 14 to clasp smaller cables 9 without crushing or deforming them.

The front sides of the jaws may be comprised of a cooperative perimeter design, as in Figure 6, such as but not limited to a cooperative cutout or stepped design 16 or by way of an alternative example an interactive collaborating finger design or any other design that provides the brace with a method for closing beyond the limitations of a non-cooperative perimeter as in prior art, thereby to provide a supporting adjustment protocol for reducing the cable aperture sizes further to brace even smaller cables.

The outside face, non-cable retaining side of the jaws, shown in Figure 6, may also be comprised of one or more interactive male and female elements 17 to allow said jaws to interact and join one jaw to another thereby providing a method of loading braces securely one on top of the other.

Each jaw may also incorporate a hole 18 at the fulcrum of its vertical plane, as shown in Figure 6, thereby to allow a threaded shaft or rod to pass through it. The hole 18 may or may not incorporate a surface wall comprising a tractable compressive strength or may incorporate a discrete insert 6 comprised of a tractable compressive strength such as, but not limited to, elastomers or any other thermoplastic designed so as to have tractable qualities thereby to isolate and or absorb deleterious influences such as but not limited to tremor, shock and vibrations which result in microphonics thereby providing a means of preventing such deleterious influences from passing into the retained cable via the fabric of the brace.

The threaded shaft or rod 19 may pass through the holes 18 of each brace of jaws, as shown in Figure 7, to stabilize them and help form a stable cable brace. Said shaft 19 may incorporate nuts 20 at the top and bottom to retain the braces and when tightened to exert linear pressure upon them in order to tighten them around cables 9 seated therein thereby to form a secure brace. The bolts may also facilitate attachment of the brace(s) to a bulkhead 21 or structure such as but not limited to a tower, pole or tray. The rod 19 may also act as a backbone to impart strength to a stack of braces and or facilitate stable rotation of the jaws as described around it.

At least the inner (cable retaining) face of each jaw, as in Figure 8 may also, but not necessarily, be formed of or incorporate a tractable compressive strength surface 22 to provide another method of isolating and or absorbing deleterious influences such as tremor, shock and vibrations thereby providing either a disparate or supporting method of preventing those influences from passing into the retained cable.

A further feature of the tractable compressive strength material is that it provides a cushion to prevent the jaw from crushing oversized cable under linear pressure, thereby supporting the aforementioned protocols. Moreover the tractable compressive strength surfaces may also provide better adherence to cables, especially undersized cables thereby providing a method to prevent the retained cable from slipping even when the linear force on the retaining jaws is only slight.

Another feature of the embodiments is a slot 23 incorporated into each jaw, as in Figure 9a and 9b. Said slot 23 can accommodate a cable tie 24 or any other fastening mechanism to allow extra or ancillary cables 29 such as but not limited to Remote Electrical Tilt cables or Fibre Optic cables or other equipment to be secured thereby obviating the need for extra braces or equipment to manage those cables or equipment whilst also reducing the need and space required for extra braces.

Yet a further feature of this embodiments is that the outer (non-cable retaining) face of each jaw of every brace, as in Figure 10, comprises at least one additional female or other cooperative part 25 of any type or design whose purpose is to allow an ancillary brace hereinafter called a 'Daughter' brace 26, shown in Figure 11a, 11b or other apparatus' comprising male or other cooperative parts 27 of any type or design to be joined and secured to the above described brace hereinafter called a 'Mother' brace. The Daughter brace 26 not falling under the scope of the appended claims or other apparatus may be of a 'butterfly' or any other design as in Figure 12. The cooperative parts on the Mother and Daughter braces 25, 27 create a method of retaining or assimilating another brace with an entirely different delimited aperture 30, as in Figure 13. Figure 13 also shows an array of adjustable braces with different cable apertures 27 loaded one on top of the other which saves space and provides for flexible working practices for the operator.

In a further iteration of an adjunctive brace feature at least one brace jaw may comprise another method of securing extra or ancillary cables or equipment integrated into its design, as in Figure 14, such as a semi-circular, or any other structural design which may cooperate with a similar shape 28, naturally inverted, on the other jaw whereby the securing method is to lay the cable or equipment between the shaped extension(s), Alternatively the shape may be of any retaining clip design. Any such adjunctive brace feature may be constructed and formed as element of the jaw or be a discrete addition thereto.

In other embodiments of the adjustable brace a stepped or notched element, or a combination of all described elements may be deployed to adjust cable apertures. The stepped or notched element 31 may be a discrete insert into the described hole 18 at the fulcrum of the jaw. Adjustment of brace aperture may be effected by rotating the element 31 to engage different step heights.

In other embodiments, a discrete insert may be provided for insertion in one or both of the above-mentioned cable-retaining channels, the insert having an outer profile that locates snug within the channel and which comprises an axial bore of a narrower diameter or other dimension so that embodiments may cater also for narrower cables. The insert may be formed of a resilient material.

The jaws may incorporate an information system to allow the user to determine the orientation and or stepped point he or she should deploy for each type of cable.

## Claims

1. A clamping member, the clamping member comprising:
a body comprising a first and a second open channels with respect to a first side;
first and second male members (1) extending with respect to said first side and configured in use to engage with a respective male member of another such clamping member when in a first opposed configuration therewith to cooperatively define between the two clamping members one or more cable-retaining channels of a first size by means of said opposed open channels,
first and second female members (2) with respect to said first side and configured in use to receive the respective first and second male members of the other such clamping member when in a second opposed configuration such that the cable-retaining channels are of a reduced size than the first size in the first opposed configuration,
wherein the body comprises a mid-wall and first and second flanges extending from the mid-wall, the flanges being shaped so as to define said first and second open channels with respect to the first side, either side of the mid-wall, and the frist and second male members and the first and second female members extend across a central axis of the mid-wall between the two open channels, and
wherein the first and second male members (1) comprise first and second arms have a mating surface (3, 4) which engages with a mating surface of the respective male members of the other such clamping member when in the first opposed configuration.

2. The clamping member of claim 1, wherein the second opposed configuration is one in which the clamping member is rotated substantially 180 degrees from the first opposed configuration with respect to the other clamping member.

3. The clamping member of any preceding claim, wherein the mating surface comprises male and female parts (3, 4) on an end surface of the first and second arms (1) for engaging with respective female and male parts on an end surface of the first and second arms of the other such clamping member.

4. The clamping member of any preceding claim, wherein the first and second female members (2) have a mating surface which engages with the mating surface (3, 4) of the other such clamping member only when in the second opposed configuration.

5. The clamping member of claim 4, wherein the mating surface of the first and second female members (2) comprises male and female parts on a base wall thereof for engaging with the male and female parts (3, 4) of the first and second male members when in the second opposed configuration.

6. The clamping member of any preceding claim, wherein the body comprises on a second side, substantially opposite to its first side, a mating surface for engagement with a second side of another such clamping member.

7. The clamping member of claim 6, wherein the mating surface comprises male and female parts for engaging with respective female and male parts on the second side of another such clamping member.

8. The clamping member of any preceding claim, wherein the free-ends of the first and second flanges are stepped so as to permit the free-ends to mate with corresponding first and second flanges of another such clamping member when in the second opposed configuration.

9. The clamping member of any preceding claim, further comprising an aperture provided in the mid-wall, substantially transverse in orientation to direction of the open channels, which aperture substantially aligns with a corresponding aperture of another such clamping member when in both the first and second configurations.

10. The clamping member of any preceding claim, wherein the two open channels have a cross-sectional profile which is curvilinear.

11. The clamping member of claim 10, wherein the curvilinear profile comprises first and second substantially straight portions joined by a curved portion.

12. The clamping member of any preceding claim, wherein the two open channels are lined with a resilient material.

13. A cable clamp system comprised of first and second clamping members according to any preceding claim.

14. A cable clamping system comprising:
first and second clamping members, each in accordance with any preceding claim.

## Patentansprüche

1. Klemmelement, wobei das Klemmelement Folgendes umfasst:
einen Körper, der einen ersten und einen zweiten offenen Kanal in Bezug auf eine erste Seite umfasst;
erste und zweite männliche Elemente (1), die sich in Bezug auf die erste Seite erstrecken und in Verwendung konfiguriert sind, um mit einem jeweiligen männlichen Element eines anderen solchen Klemmelements in Eingriff zu treten, wenn sie in einer ersten gegenüberliegenden Konfiguration damit sind, um zusammenwirkend zwischen den zwei Klemmelementen einen oder mehrere Kabelhaltekanäle einer ersten Größe mittels der gegenüberliegenden offenen Kanäle zu definieren,
erste und zweite weibliche Elemente (2) in Bezug auf die erste Seite und in Verwendung konfiguriert, um die jeweiligen ersten und zweiten männlichen Elemente des anderen solchen Klemmelements aufzunehmen, wenn sie in einer zweiten gegenüberliegenden Konfiguration sind, sodass die Kabelhaltekanäle von einer reduzierteren Größe als die erste Größe in der ersten gegenüberliegenden Konfiguration sind,
wobei der Körper eine Mittelwand und erste und zweite Flansche umfasst, die sich von der Mittelwand erstrecken, wobei die Flansche geformt sind, um die ersten und zweiten offenen Kanäle in Bezug auf die erste Seite auf beiden Seiten der Mittelwand zu definieren, und sich die ersten und zweiten männlichen Elemente und die ersten und zweiten weiblichen Elemente über eine Mittelachse der Mittelwand zwischen den zwei offenen Kanälen erstrecken, und
wobei die ersten und zweiten männlichen Elemente (1) erste und zweite Arme umfassen, die eine Passfläche (3, 4) aufweisen, die mit einer Passfläche der jeweiligen männlichen Elemente des anderen solchen Klemmelements in Eingriff tritt, wenn sie in der ersten gegenüberliegenden Konfiguration sind.

2. Klemmelement nach Anspruch 1, wobei die zweite gegenüberliegende Konfiguration eine ist, in der das Klemmelement im Wesentlichen um 180 Grad von der ersten gegenüberliegenden Konfiguration in Bezug auf das andere Klemmelement gedreht ist.

3. Klemmelement nach einem vorhergehenden Anspruch, wobei die Passfläche männliche und weibliche Teile (3, 4) an einer Endfläche der ersten und zweiten Arme (1) zum Eingriff mit jeweiligen weiblichen und männlichen Teilen an einer Endfläche der ersten und zweiten Arme des anderen solchen Klemmelements umfasst.

4. Klemmelement nach einem vorhergehenden Anspruch, wobei die ersten und zweiten weiblichen Elemente (2) eine Passfläche aufweisen, die nur mit der Passfläche (3, 4) des anderen solchen Klemmelements in Eingriff tritt, wenn sie in der zweiten gegenüberliegenden Konfiguration sind.

5. Klemmelement nach Anspruch 4, wobei die Passfläche der ersten und zweiten weiblichen Elemente (2) männliche und weibliche Teile an einer Basiswand davon zum Eingriff mit den männlichen und weiblichen Teilen (3, 4) der ersten und zweiten männlichen Elemente umfasst, wenn sie in der zweiten gegenüberliegenden Konfiguration sind.

6. Klemmelement nach einem vorhergehenden Anspruch, wobei der Körper auf einer zweiten Seite, im Wesentlichen gegenüber seiner ersten Seite, eine Passfläche zum Eingriff mit einer zweiten Seite eines anderen solchen Klemmelements umfasst.

7. Klemmelement nach Anspruch 6, wobei die Passfläche männliche und weibliche Teile zum Eingriff mit jeweiligen weiblichen und männlichen Teilen auf der zweiten Seite eines anderen solchen Klemmelements umfasst.

8. Klemmelement nach einem vorhergehenden Anspruch, wobei die freien Enden der ersten und zweiten Flansche abgestuft sind, um zu ermöglichen, dass die freien Enden mit entsprechenden ersten und zweiten Flanschen eines anderen solchen Klemmelements zusammenpassen, wenn sie in der zweiten gegenüberliegenden Konfiguration sind.

9. Klemmelement nach einem vorhergehenden Anspruch, ferner umfassend eine Öffnung, die in der Mittelwand bereitgestellt ist, im Wesentlichen quer in Ausrichtung zu Richtung der offenen Kanäle, wobei die Öffnung im Wesentlichen mit einer entsprechenden Öffnung eines anderen solchen Klemmelements ausgerichtet ist, wenn sie sowohl in der ersten als auch in der zweiten Konfiguration sind.

10. Klemmelement nach einem vorhergehenden Anspruch, wobei die zwei offenen Kanäle ein Querschnittsprofil aufweisen, das gekrümmt ist.

11. Klemmelement nach Anspruch 10, wobei das gekrümmte Profil erste und zweite im Wesentlichen gerade Abschnitte umfasst, die durch einen gebogenen Abschnitt verbunden sind.

12. Klemmelement nach einem vorhergehenden Anspruch, wobei die zwei offenen Kanäle mit einem elastischen Material ausgekleidet sind.

13. Kabelklemmsystem, das aus ersten und zweiten Klemmelementen gemäß einem vorhergehenden Anspruch umfasst ist.

14. Kabelklemmsystem, umfassend:
erste und zweite Klemmelemente, jeweils in Übereinstimmung mit einem vorhergehenden Anspruch.

## Revendications

1. Élément de serrage, l'élément de serrage comprenant : un corps comprenant un premier et un second canal ouvert par rapport à un premier côté ;
des premier et second éléments mâles (1) s'étendant par rapport audit premier côté et conçus pour, lors de l'utilisation, venir en prise avec un élément mâle respectif d'un autre élément de serrage de ce type lorsqu'ils sont dans une première configuration opposée avec ceux-ci pour définir de manière coopérative entre les deux éléments de serrage un ou plusieurs canaux de retenue de câble d'une première taille au moyen desdits canaux ouverts opposés,
des premier et second éléments femelles (2) par rapport audit premier côté et conçus pour, lors de l'utilisation, recevoir les premier et second éléments mâles respectifs de l'autre élément de serrage de ce type lorsqu'ils sont dans une seconde configuration opposée de sorte que les canaux de retenue de câble soient d'une taille réduite par rapport à la première taille dans la première configuration opposée, ledit corps comprenant une paroi médiane et des première et seconde brides s'étendant à partir de la paroi médiane, les brides étant façonnées de façon à définir lesdits premier et second canaux ouverts par rapport au premier côté, de chaque côté de la paroi médiane, et lesdits premier et second éléments mâles et lesdits premier et second éléments femelles s'étendant à travers un axe central de la paroi médiane entre les deux canaux ouverts, et
lesdits premier et second éléments mâles (1) comprenant des premier et second bras comportant une surface d'accouplement (3, 4) qui vient en prise avec une surface d'accouplement des éléments mâles respectifs de l'autre élément de serrage de ce type lorsqu'ils sont dans la première configuration opposée.

2. Élément de serrage de la revendication 1, ladite seconde configuration opposée étant une configuration dans laquelle l'élément de serrage est tourné sensiblement à 180 degrés par rapport à la première configuration opposée par rapport à l'autre élément de serrage.

3. Elément de serrage d'une quelconque revendication précédente, ladite surface d'accouplement comprenant des parties mâle et femelle (3, 4) sur une surface d'extrémité des premier et second bras (1) destinées à venir en prise avec des parties femelle et mâle respectives sur une surface d'extrémité des premier et second bras de l'autre élément de serrage de ce type.

4. Elément de serrage d'une quelconque revendication précédente, lesdits premier et second éléments femelles (2) comportant une surface d'accouplement qui vient en prise avec la surface d'accouplement (3, 4) de l'autre élément de serrage de ce type uniquement lorsqu'ils sont dans la seconde configuration opposée.

5. Elément de serrage de la revendication 4, ladite surface d'accouplement des premier et second éléments femelles (2) comprenant des parties mâle et femelle sur une paroi de base de ceux-ci destinées à venir en prise avec les parties mâle et femelle (3, 4) des premier et second éléments mâles lorsqu'ils sont dans la seconde configuration opposée.

6. Elément de serrage d'une quelconque revendication précédente, ledit corps comprenant sur un second côté, sensiblement opposé à son premier côté, une surface d'accouplement destinée à venir en prise avec un second côté d'un autre élément de serrage de ce type.

7. Elément de serrage de la revendication 6, ladite surface d'accouplement comprenant des parties mâle et femelle destinées à venir en prise avec des parties femelle et mâle respectives sur le second côté d'un autre élément de serrage de ce type.

8. Elément de serrage d'une quelconque revendication précédente, lesdites extrémités libres des première et seconde brides étant étagées de façon à permettre aux extrémités libres de s'accoupler avec des première et seconde brides correspondantes d'un autre élément de serrage de ce type lorsqu'elles sont dans la seconde configuration opposée.

9. Elément de serrage d'une quelconque revendication précédente, comprenant en outre une ouverture prévue dans la paroi médiane, d'orientation sensiblement transversale par rapport à la direction des canaux ouverts, laquelle ouverture est sensiblement alignée avec une ouverture correspondante d'un autre élément de serrage de ce type lorsqu'ils se trouvent à la fois dans les première et seconde configurations.

10. Elément de serrage d'une quelconque revendication précédente, lesdits deux canaux ouverts comportant un profil de section transversale qui est curviligne.

11. Elément de serrage de la revendication 10, ledit profil curviligne comprenant des première et seconde parties sensiblement droites jointes par une partie incurvée.

12. Elément de serrage d'une quelconque revendication précédente, lesdits deux canaux ouverts étant revêtus d'un matériau élastique.

13. Système serre-câble comprenant des premier et second éléments de serrage selon une quelconque revendication précédente.

14. Système de serrage de câble comprenant :
des premier et second éléments de serrage, chacun conforme à une quelconque revendication précédente.
